# EUROPEAN PATENT SPECIFICATION

(11) **EP 4 420 414 B1**
(45) Date of publication and mention of the grant of the patent: **14.05.2025**
(21) Application number: 22813370.8
(22) Date of filing: 19.10.2022
(51) Int. Cl.: H04W 40/38, H04W 40/08

(54) **NR RELAYS - METHODS FOR MULTIHOP DISCOVERY AND RELAY SELECTION**
NR-RELAIS - VERFAHREN ZUR MULTIHOP-ENTDECKUNG UND RELAISAUSWAHL
RELAIS NR-PROCÉDÉS DESTINÉS À LA DÉCOUVERTE DE SAUTS MULTIPLES ET À LA SÉLECTION DE RELAIS

(30) Priority: 19.10.2021 US 202163257287 P
(43) Date of publication of application: 28.08.2024
(60) Divisional application: 25169423.8
(73) Proprietor: InterDigital Patent Holdings, Inc., Wilmington, DE 19809 (US)
(72) Inventor: HOANG, Tuong, Montreal, Québec H3A 3G4 (CA); FREDA, Martino, Montreal, Québec H3A 3G4 (CA); TEYEB, Oumer, Montreal, Québec H3A 3G4 (CA); RAO, Jaya, Montreal, Québec H3A 3G4 (CA); LEE, Moon IL, Melville, New York 11747 (US)
(74) Representative: AWA Sweden AB
(86) International application number: PCT/US2022/047159
(87) International publication number: WO 2023/069539

(56) References cited:
- WO-A1-2020/219670
- WO-A1-2021/207505

## Description

### CROSS-REFERENCE TO RELATED APPLICATIONS

This application claims the benefit of U.S. Provisional Application No. 63/257,287, filed October 19, 2021.

### BACKGROUND

In communications systems having user equipment (UE) and network nodes, relays such as UE-to-network relay UE (U2N relay) and UE-to-UE relay UE (U2U relay) may enhance network coverage and reliability. In a network employing relays by UEs, a transmitting UE needs to discover and select a relay before starting its transmissions to a remote UE. For a single-hop U2N relay, two possible models, may specified for discovery and relay selection or re-selection. In a first model (hereinafter model A), a U2N relay sends discovery announcement messages to remote UEs. In a second model (hereinafter model B), remote UEs send solicitation messages to ask for a relay service from another relay UE. The U2N relays may then respond to the solicitation messages from the remote UEs. In contrast to a single hop relay, for a multi-hop relay, it is possible for one relay (e.g., U2U relay) to be within in network coverage or out of coverage. In a scenario where it is possible for every UE to transmit discovery and become a U2U relay, allowing every UE to do can waste resources and create congestion to the discovery resource pool. Thus, methods and apparatus that determine which UEs or wireless transmit/receive unit (WTRUs) transmit discovery messages and/or what information the discovery messages should include are needed. Other methods and devices for multi-hop relays in a mesh network are disclosed in the patent publications WO2020/219670A1 and WO2021/207505A1.

### SUMMARY

This invention is defined by the appended claims. Methods and apparatuses are described herein for multiple hop discovery and relay selection. For example, a network node may determine configuration information for transmission of a discovery message. The configuration information may comprise a Uu reference signal received power (RSRP) condition and a distance to base station (BS) condition. The Uu RSRP condition may include a range of Uu RSRP per hop to the BS and a range of Uu RSRP per Quality of Service (QoS) of a relay service. The distance to BS condition may include a range of distance to the BS per number of hops to the BS and a range of distance to the BS per QoS of a relay service. The network node may then transmit, to one or more child network nodes, the discovery message based on the configuration information.

### BRIEF DESCRIPTION OF THE DRAWINGS

A more detailed understanding may be had from the following description, given by way of example in conjunction with the accompanying drawings, wherein like reference numerals in the figures indicate like elements, and wherein:
FIG. 1A is a system diagram illustrating an example communications system in which one or more disclosed embodiments may be implemented;
FIG. 1B is a system diagram illustrating an example wireless transmit/receive unit (WTRU) that may be used within the communications system illustrated in FIG. 1A according to an embodiment;
FIG. 1C is a system diagram illustrating an example radio access network (RAN) and an example core network (CN) that may be used within the communications system illustrated in FIG. 1A according to an embodiment;
FIG. 1D is a system diagram illustrating a further example RAN and a further example CN that may be used within the communications system illustrated in FIG. 1A according to an embodiment;
FIG. 2 is a diagram illustrating an example system for discovery message transmission with multiple configured Uu located in different received signal received power (RSRP) ranges;
FIG. 3 is a diagram illustrating an example user plane radio protocol stack for layer 2 evolved User Equipment (UE)-to-Network relay (PC5);
FIG. 4 is a diagram illustrating an example control plane radio protocol stack for layer 2 evolved UE-to-Network relay (PC5);
FIG. 5 is a diagram illustrating an example UE-to-Network relay discovery;
FIG. 6 is a diagram illustrating an example UE-to-Network relay discovery;
FIG. 7. is a flow diagram of a process for determining whether to transmit a discovery message;
FIG. 8. is a flow diagram of a further process for determining whether to transmit a discovery message;
FIG. 9. is a flow diagram of a further process for determining whether to transmit a discovery message; and
FIG. 10. is a flow diagram of a further process for determining whether to transmit a discovery message.

### DETAILED DESCRIPTION

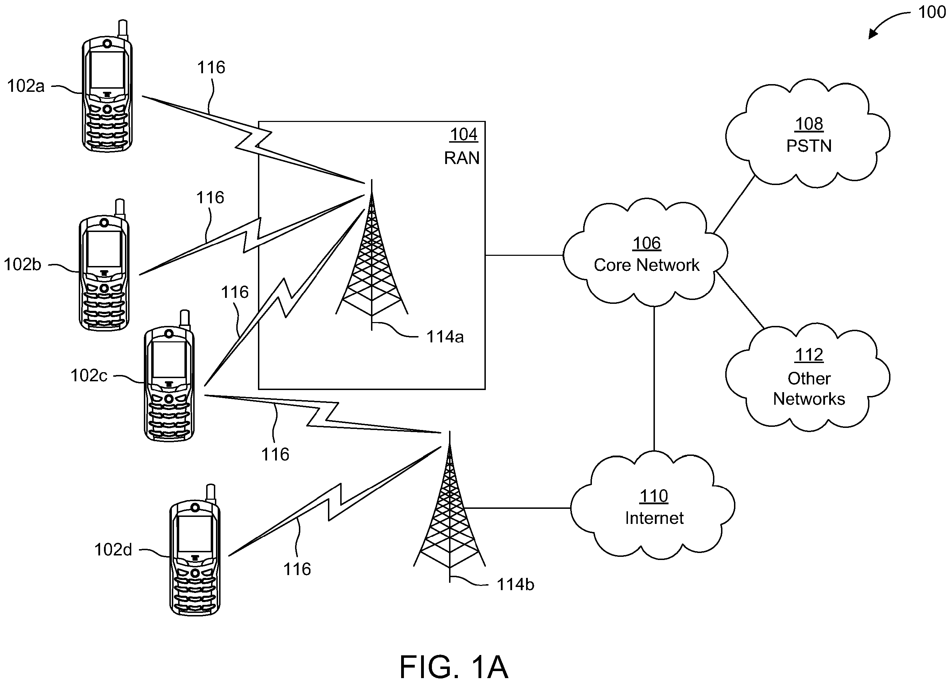

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), singlecarrier FDMA (SC-FDMA), zero-tail unique-word discrete Fourier transform Spread OFDM (ZT-UW-DFT-S-OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a radio access network (RAN) 104, a core network (CN) 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a station (STA), may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106, the Internet 110, and/or the other networks 112. By way of example, the base stations 114a, 114b may be a base transceiver station (BTS), a NodeB, an eNode B (eNB), a Home Node B, a Home eNode B, a next generation NodeB, such as a gNode B (gNB), a new radio (NR) NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed Uplink (UL) Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using NR.

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106.

The RAN 104 may be in communication with the CN 106, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104 and/or the CN 106 may be in direct or indirect communication with other RANs that employ the same RAT as the RAN 104 or a different RAT. For example, in addition to being connected to the RAN 104, which may be utilizing a NR radio technology, the CN 106 may also be in communication with another RAN (not shown) employing a GSM, UMTS, CDMA 2000, WiMAX, E-UTRA, or WiFi radio technology.

The CN 106 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

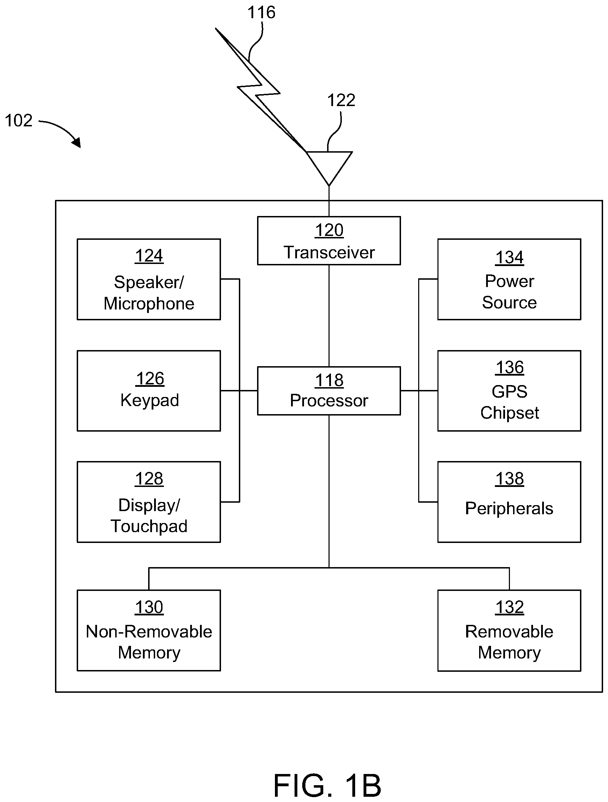

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs), any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Liion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth^{®} module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors. The sensors may be one or more of a gyroscope, an accelerometer, a hall effect sensor, a magnetometer, an orientation sensor, a proximity sensor, a temperature sensor, a time sensor; a geolocation sensor, an altimeter, a light sensor, a touch sensor, a magnetometer, a barometer, a gesture sensor, a biometric sensor, a humidity sensor and the like.

The WTRU 102 may include a full duplex radio for which transmission and reception of some or all of the signals (e.g., associated with particular subframes for both the UL (e.g., for transmission) and DL (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WTRU 102 may include a half-duplex radio for which transmission and reception of some or all of the signals (e.g., associated with particular subframes for either the UL (e.g., for transmission) or the DL (e.g., for reception)).

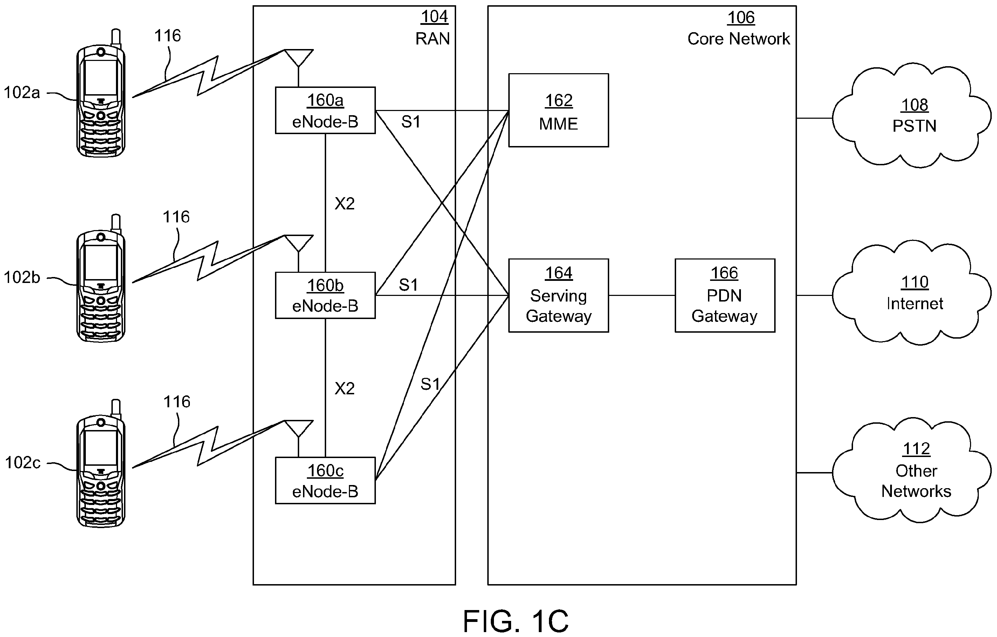

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (PGW) 166. While the foregoing elements are depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width. The primary channel may be the operating channel of the BSS and may be used by the STAs to establish a connection with the AP. In certain representative embodiments, Carrier Sense Multiple Access with Collision Avoidance (CSMA/CA) may be implemented, for example in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two noncontiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11af and 802.11ah. The channel operating bandwidths, and carriers, are reduced in 802.11af and 802.11ah relative to those used in 802.11n, and 802.11ac. 802.11af supports 5 MHz, 10 MHz, and 20 MHz bandwidths in the TV White Space (TVWS) spectrum, and 802.11ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications (MTC), such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode) transmitting to the AP, all available frequency bands may be considered busy even though a majority of the available frequency bands remains idle.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

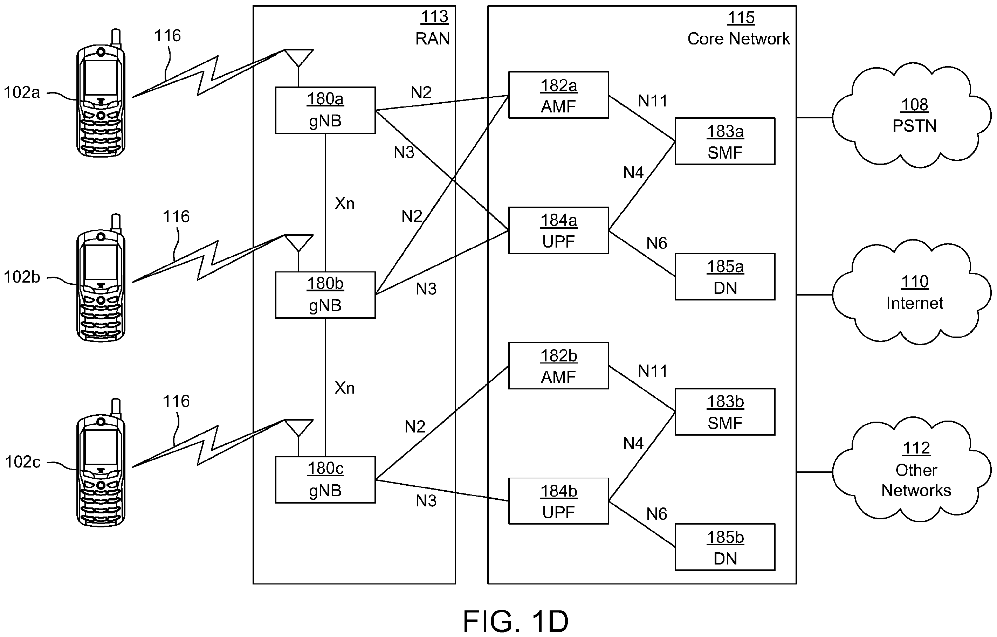

FIG. 1D is a system diagram illustrating the RAN 104 and the CN 106 according to an embodiment. As noted above, the RAN 104 may employ an NR radio technology to communicate with the WTRUs 102a, 102b, 102c over the air interface 116. The RAN 104 may also be in communication with the CN 106.

The RAN 104 may include gNBs 180a, 180b, 180c, though it will be appreciated that the RAN 104 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTls) of various or scalable lengths (e.g., containing a varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, DC, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 106 shown in FIG. 1D may include at least one AMF 182a, 182b, at least one UPF 184a,184b, at least one Session Management Function (SMF) 183a, 183b, and possibly a Data Network (DN) 185a, 185b. While the foregoing elements are depicted as part of the CN 106, it will be appreciated that any of these elements may be owned and/or operated by an entity other than the CN operator.

The AMF 182a, 182b may be connected to one or more of the gNBs 180a, 180b, 180c in the RAN 104 via an N2 interface and may serve as a control node. For example, the AMF 182a, 182b may be responsible for authenticating users of the WTRUs 102a, 102b, 102c, support for network slicing (e.g., handling of different protocol data unit (PDU) sessions with different requirements), selecting a particular SMF 183a, 183b, management of the registration area, termination of non-access stratum (NAS) signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for MTC access, and the like. The AMF 182a, 182b may provide a control plane function for switching between the RAN 104 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 106 via an N11 interface. The SMF 183a, 183b may also be connected to a UPF 184a, 184b in the CN 106 via an N4 interface. The SMF 183a, 183b may select and control the UPF 184a, 184b and configure the routing of traffic through the UPF 184a, 184b. The SMF 183a, 183b may perform other functions, such as managing and allocating UE IP address, managing PDU sessions, controlling policy enforcement and QoS, providing DL data notifications, and the like. A PDU session type may be IP-based, non-IP based, Ethernet-based, and the like.

The UPF 184a, 184b may be connected to one or more of the gNBs 180a, 180b, 180c in the RAN 104 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering DL packets, providing mobility anchoring, and the like.

The CN 106 may facilitate communications with other networks. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local DN 185a, 185b through the UPF 184a, 184b via the N3 interface to the UPF 184a, 184b and an N6 interface between the UPF 184a, 184b and the DN 185a, 185b.

In view of FIGs. 1A-1D, and the corresponding description of FIGs. 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

The following terminologies may be used throughout this disclosure:
- ACK: Acknowledgement
- BLER: Block Error Rate
- CB: Contention-Based (e.g. access, channel, resource)
- CBR: Channel Busy Ratio
- CP: Cyclic Prefix
- CP-OFDM: Conventional OFDM (relying on cyclic prefix)
- CQI: Channel Quality Indicator
- CR: Channel Occupancy Ratio
- CRC: Cyclic Redundancy Check
- CSI: Channel State Information
- D2D: Device to Device transmissions (e.g., LTE Sidelink)
- DCI: Downlink Control Information
- DFT-s-OFDM: Digital Fourier Transform spread OFDM
- DL: Downlink
- DMRS: Demodulation Reference Signal
- FB: Feed Back
- FDD: Frequency Division Duplexing
- FDM: Frequency Division Multiplexing
- LBT: Listen-Before-Talk
- LLC: Low Latency Communications
- LTE: Long Term Evolution e.g. from 3GPP LTE R8 and up
- MAC: Medium Access Control
- NACK: Negative ACK
- MBB: Massive Broadband Communications
- MC: MultiCarrier
- MCS: Modulation and Coding Scheme
- OFDM: Orthogonal Frequency-Division Multiplexing
- OOB: Out-Of-Band (emissions)
- P_{cmax}: Total available UE power in a given TI
- PC5-S: PC5 signaling
- PDB: Packet Delay Budget
- PHY: Physical Layer
- PSCCH: Physical SL Control Channel
- PSFCH: Physical SL Feedback Channel
- PSS: Primary Synchronization Signal
- PSSCH: Physical SL Shared Channel
- PSSCH-RSRP: PSSCH Reference Signal Received Power
- QoS: Quality of Service (from the physical layer perspective)
- RNTI: Radio Network Identifier
- RRC: Radio Resource Control
- RRM: Radio Resource Management
- RS: Reference Signal
- RSRP: Reference Signal Receive Power
- RSRQ: Reference Signal Receive Quality
- RTT: Round-Trip Time
- S-RSSI: SL Received Signal Strength Indicator
- SL: Side Link
- SL-RSRP: Sidelink Reference Signal Receive Power
- SD-RSRP: Sidelink Discovery Reference Signal Receive Power
- SS: Synchronization Signal
- SSS: Secondary Synchronization Signal
- TB: Transport Block
- TDD: Time-Division Duplexing
- TDM: Time-Division Multiplexing
- TTI: Transmission Time Interval
- TRP: Transmission / Reception Point
- TRX: Transceiver
- UL: Uplink
- URLLC: Ultra-Reliable and Low Latency Communications
- V2X: Vehicular communications

The terms UE-to-UE (U2) relay and WTRU-to-WTRU relay may be used interchangeably throughout this disclosure. The terms UE-to-UE (U2U) and WTRU-to-WTRU may be used interchangeably throughout this disclosure. The terms UE-to-Network (U2N) relay and WTRU-to-Network relay may be used interchangeably throughout this disclosure. The terms UE-to-Network (U2N) and WTRU-to-Network may be used interchangeably throughout this disclosure.

### START OF RELAY DESCRIPTION

Current 5G wireless communications systems operate primarily on network to device communications links wherein data flows directly between a base station (Network) and a wireless user device (UE or WTRU). In order to extend coverage range from the base station, sidelink relaying may be used, which refers to the use of both WTRU-to-Network relays and WTRU-to-WTRU relays.

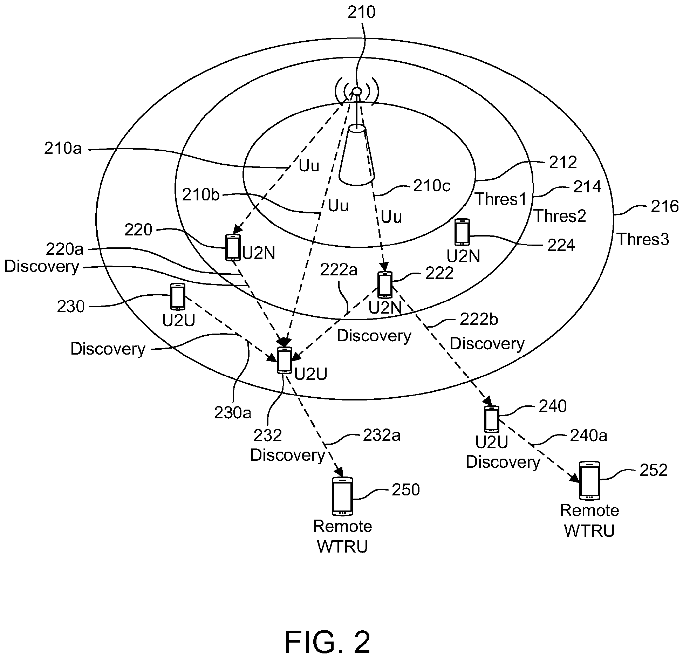

FIG. 2 is a diagram of an exemplary wireless communications system for implementing sidelink relaying.

An exemplary system comprises a network node or gNB, 210. The network node 210 is configured to communicate wirelessly with mobile user equipment (UE). Three signal level thresholds are shown at increasing distances from the node 210. A plurality of user devices (UE) are shown. User equipment (UE) (220, 222, 224) are shown located between Threshold 1 and Threshold 2. User equipment (UE) (230, 232) are shown located between Threshold 2 and Threshold 3. User equipment (UE) (240, 250, 252) are shown located beyond Threshold 3. As shown, UE 220, 222, and 232 communicate directly with the node 210. These direct UE-node links (210a, 210b, 210c) are is labeled Uu. UE 220 and 222 are shown transmitting U2N discovery messages, i.e. announcing to other UE that they are available to relay from another UE (e.g. 232, 240) directly back to the node 220. UE 230, 232 and 240 are shown transmitting U2U discovery messages (230a..233a, 240a), i.e. announcing to other UE that they are available to relay from that other UE to another UE closer to the node 210. UE 250 and 252 are shown as remote UE that are incapable of direct communication with the node 210, but can communicate with the node via relays 232a and 240a with US 232 and 240, respectively.

In discovery model A, a U2N relay sends discovery announcement messages to remote UEs. In discovery model B, remote UEs send solicitation messages to ask for a relay service from another relay UE. The U2N relays may then respond to the solicitation messages from the remote UEs. FIG. 2 illustrates an example system employing discovery model A.

In contrast to a single hop relay, for a multi-hop relay (e.g. as shown in FIG. 2 by UE 222, 240, 252), it is possible for one relay (e.g., U2U relay) to be within in network coverage or out of coverage (e.g UE 240). In a scenario where it is possible for every UE to transmit discovery and become a U2U relay, allowing every UE to do so can waste resources and create congestion to the discovery resource pool. Described below are methods for determining which UEs or wireless transmit/receive unit (WTRUs) transmit discovery messages and/or what information the discovery messages should include are needed.

For model A discovery, the WTRU may be (pre-)configured multiple (e.g., two) Uu RSRP ranges, in which the first range may be used when the WTRU transmit a discovery message to be an WTRU-to-Network relay (e.g., directly connect to the gNB), and the second range may be used when the WTRU transmits a discovery message to be an WTRU-to-WTRU relay (e.g., not directly connect to the gNB). The WTRU may then determine whether to transmit a discovery message based on whether the WTRU targets to be an WTRU-to-WTRU relay or WTRU-to-Network relay and whether the measured Uu RSRP is within the associated range. Specifically, if the Uu RSRP is within the first range (e.g., Thres2<Uu RSRP< Thres1), the WTRU may transmit a discovery message to serve as an WTRU-to-Network relay. Otherwise, if the Uu RSRP is within the second range (e.g., Thres3<Uu RSRP< Thres2), the WTRU may transmit a discovery message to serve as an WTRU-to-WTRU relay. The WTRU may additionally determine whether to transmit a discovery message to serve as an WTRU-to-WTRU based on whether it detects a WTRU-to-Network relay. Specifically, it may transmit a discovery message to serve as an WTRU-to-WTRU if it detects a WTRU-to-Network relay; otherwise, it may not transmit the discovery message.

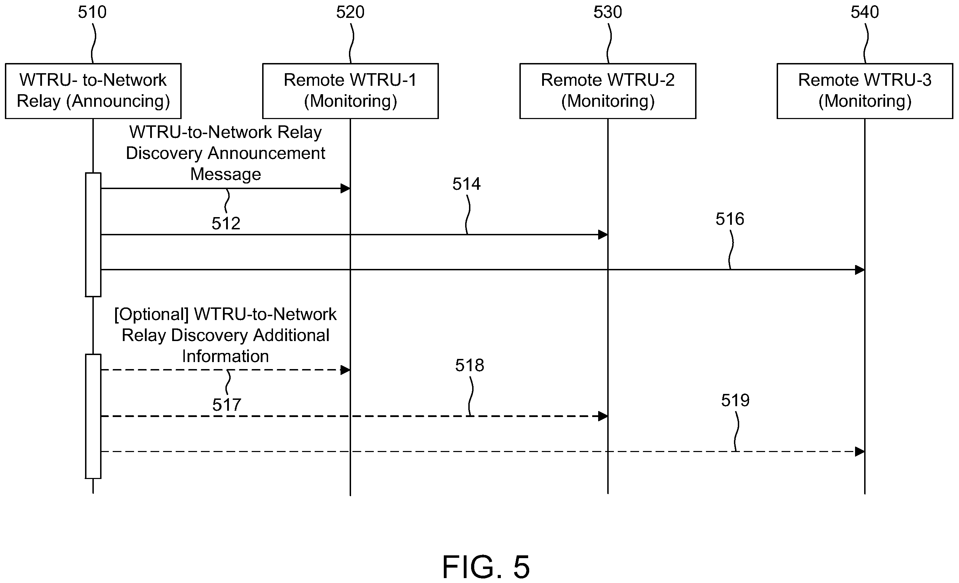

FIG. 5 illustrates an example WTRU-to-Network relay discovery with Model A. In Model A, WTRU-to-Network relay may send announcement messages. A UE 510 announcing availability as a UE-network relay sends a discovery announcement message 512, 514, 516, which is received by remote UE1 (520), UE2 (530) and UE 3(540). In embodiments, the UE announcing availability as a UE-Network relay can also send additional information (517, 518, 519) to the remote UE (520, 530, 540), respectively.

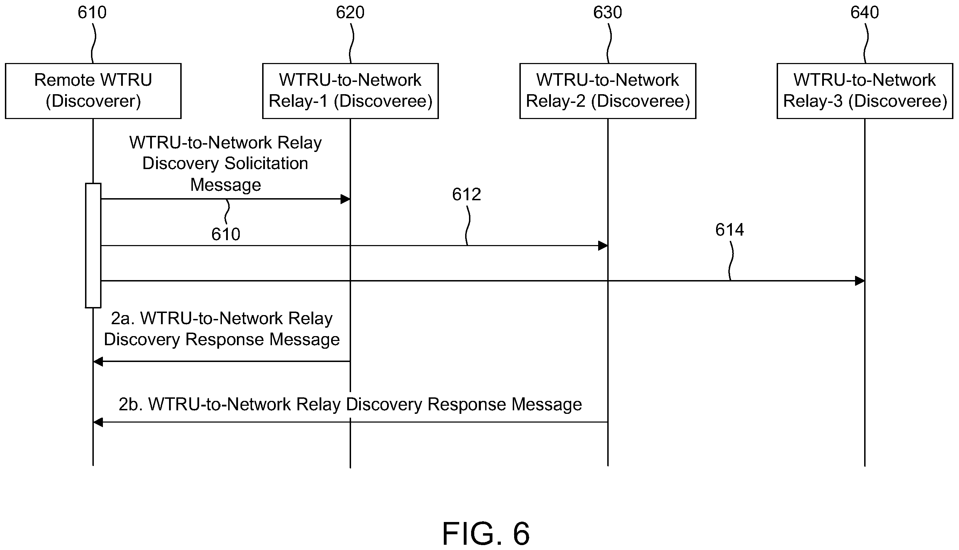

FIG. 6 illustrates an example WTRU-to-Network relay discovery with Model B. In model B, a remote WTRU (e.g. 610) may send solicitation messages (610, 612, 614) to ask for a relay service from another relay WTRU (e.g. 620, 630, 640 . Then WTRU-to-Network relays may respond to the solicitation message from the remote WTRU. In this example, UE-Network Relay 1 (620) and UE-Network Relay 2 (630) respond to the remote UE 610 with discovery response messages 622 and 632, respectively.

The coverage extension for sidelink-based communication may include WTRU-to-Network coverage extension and WTRU-to-WTRU coverage extension. For WTRU-to-Network coverage extension, Uu coverage reachability may be necessary for WTRUs to reach a server in PDN network or counterpart WTRU out of proximity area.

For the WTRU-to-WTRU coverage extension, proximity reachability may be limited to single-hop sidelink link, either via EUTRA-based or NR-based sidelink technology. However, that may not be sufficient in the scenario where there is no Uu coverage, considering the limited single-hop sidelink coverage. Overall, sidelink connectivity may be further extended in NR framework, in order to support the enhanced QoS requirements.

Mechanisms with minimum specification impact to support the SA requirements for sidelink-based WTRU-to-network and WTRU-to-WTRU relay may focus on the following aspects (if applicable) for layer-3 relay and layer-2 relay [RAN2]; relay (re-)selection criterion and procedure; relay/remote WTRU authorization; QoS for relaying functionality; service continuity; security of relayed connection after SA3 has provided its conclusions; and impact on user plane protocol stack and control plane procedure (e.g., connection management of relayed connection).

Mechanisms to support upper layer operations of discovery model/procedure for sidelink relaying may assume no new physical layer channel / signal [RAN2]. WTRU-to-network relays and WTRU-to-WTRU relays may use the same relaying embodiment. For layer-2 WTRU-to-network relay, the architecture of end-to-end PDCP and hop-by-hop RLC may be taken as starting point.

Relaying via ProSe WTRU-to-Network relays can extend network coverage to an out of coverage WTRU by using PC5 (D2D) between an out of coverage WTRU and a WTRU-to-Network relay. A ProSe WTRU-to-Network relay may provide a generic L3 forwarding function that can relay any type of IP traffic between the remote WTRU and the network. One-to-one and one-to-many sidelink communications are used between the remote WTRU(s) and the ProSe WTRU-to-Network relay. For both remote WTRU and relay WTRU, only one single carrier (i.e., Public Safety ProSe Carrier) operation may be supported (i.e., Uu and PC5 may be the same carrier for relay/remote WTRU). The remote WTRU may be authorized by upper layers and can be in-coverage of the Public Safety ProSe Carrier or out-of-coverage on any supported carriers including Public Safety ProSe Carrier for WTRU-to-Network relay discovery, (re)selection and communication. The ProSe WTRU-to-Network relay may be always in-coverage of EUTRAN. The ProSe WTRU-to-Network relay and the remote WTRU may perform sidelink communication and sidelink discovery.

Relay selection/reselection for ProSe WTRU-to-Network relays may be performed based on combination of a AS layer quality measurements (e.g., RSRP) and upper layer criteria. Specifically, a base station (BS) (e.g., eNB) may control whether the WTRU can act as a ProSe WTRU-to-Network relay. If the BS (e.g., eNB) broadcast any information associated to ProSe WTRU-to-Network relay operation, then ProSe WTRU-to-Network relay operation may be supported in the cell.

The BS (e.g., eNB) may provide transmission resources for ProSe WTRU-to-Network relay discovery using broadcast signaling for RRC_IDLE state and dedicated signaling for RRC_CONNECTED state. The BS (e.g., eNB) may provide reception resources for ProSe WTRU-to-Network relay discovery using broadcast signaling.The BS (e.g., eNB) may broadcast a minimum and/or a maximum Uu link quality (e.g., RSRP) threshold(s) that the ProSe WTRU-to-Network relay needs to respect before it can initiate a WTRU-to-Network relay discovery procedure. In RRC_IDLE, when the BS (e.g., eNB) broadcasts transmission resource pools, the WTRU may use the threshold(s) to autonomously start or stop the WTRU-to-Network relay discovery procedure. In RRC_CONNECTED, the WTRU may use the threshold(s) to determine if it can indicate to BS (e.g., eNB) that it is a relay WTRU and wants to start ProSe WTRU-to-Network relay discovery.

If the BS (e.g., eNB) does not broadcast transmission resource pools for ProSe-WTRU-to-Network relay discovery, then a WTRU can initiate a request for ProSe-WTRU-to-Network relay discovery resources by dedicated signaling, respecting these broadcasted threshold(s).

If the ProSe-WTRU-to-Network relay is initiated by broadcast signaling, it can perform ProSe WTRU-to-Network relay discovery when in RRC_IDLE. If the ProSe WTRU-to-Network relay is initiated by dedicated signaling, it can perform relay discovery as long as it is in RRC_CONNECTED.

A ProSe WTRU-to-Network relay performing sidelink communication for ProSe WTRU-to-Network relay operation has to be in RRC_CONNECTED. After receiving a layer-2 link establishment request or TMGI monitoring request (e.g., upper layer message) from the remote WTRU, the ProSe WTRU-to-Network relay may indicate to the BS (e.g., eNB) that it is a ProSe WTRU-to-Network relay and intends to perform ProSe WTRU-to-Network relay sidelink communication. The BS (e.g., eNB) may provide resources for ProSe WTRU-to-Network relay communication.

The remote WTRU can decide when to start monitoring for ProSe WTRU-to-Network relay discovery. The remote WTRU can transmit ProSe WTRU-to-Network relay discovery solicitation messages while in RRC_IDLE or in RRC_CONNECTED depending on the configuration of resources for ProSe WTRU-to-Network relay discovery. The BS (e.g., eNB) may broadcast a threshold, which is used by the remote WTRU to determine if it can transmit ProSe WTRU-to-Network relay discovery solicitation messages, to connect or communicate with ProSe WTRU-to-Network relay WTRU. The RRC_CONNECTED remote WTRU, may use the broadcasted threshold to determine if it can indicate to BS (e.g., eNB) that it is a remote WTRU and wants to participate in ProSe WTRU-to-Network relay discovery and/or communication. The BS (e.g., eNB) may provide, transmission resources using broadcast or dedicated signaling and reception resources using broadcast signaling for ProSe WTRU-to-Network relay operation. The remote WTRU may stop using ProSe WTRU-to-Network relay discovery and communication resources when RSRP goes above the broadcasted threshold.

Exact time of traffic switching from Uu to PC5 or vice versa is up to a higher layer.

The remote WTRU may perform radio measurements at PC5 interface and use them for ProSe WTRU-to-Network relay selection and reselection along with higher layer criterion. A ProSe WTRU-to-Network relay may be considered suitable in terms of radio criteria if the PC5 link quality exceeds configured threshold (e.g., pre-configured or provided by BS such as eNB). The remote WTRU may select the ProSe WTRU-to-Network relay, which satisfies higher layer criterion and has best PC5 link quality among all suitable ProSe WTRU-to-Network relays.

The remote WTRU triggers ProSe WTRU-to-Network Relay reselection when PC5 signal strength of current ProSe WTRU-to-Network relay is below configured signal strength threshold. The remote WTRU triggers ProSe WTRU-to-Network Relay reselection when it receives a layer-2 link release message (e.g., upper layer message) from ProSe WTRU-to-Network relay.

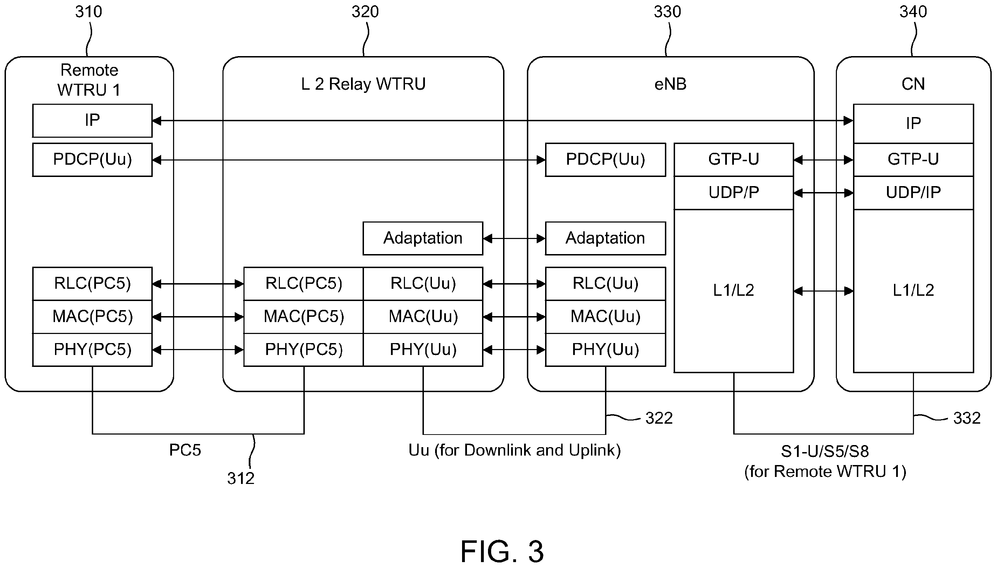

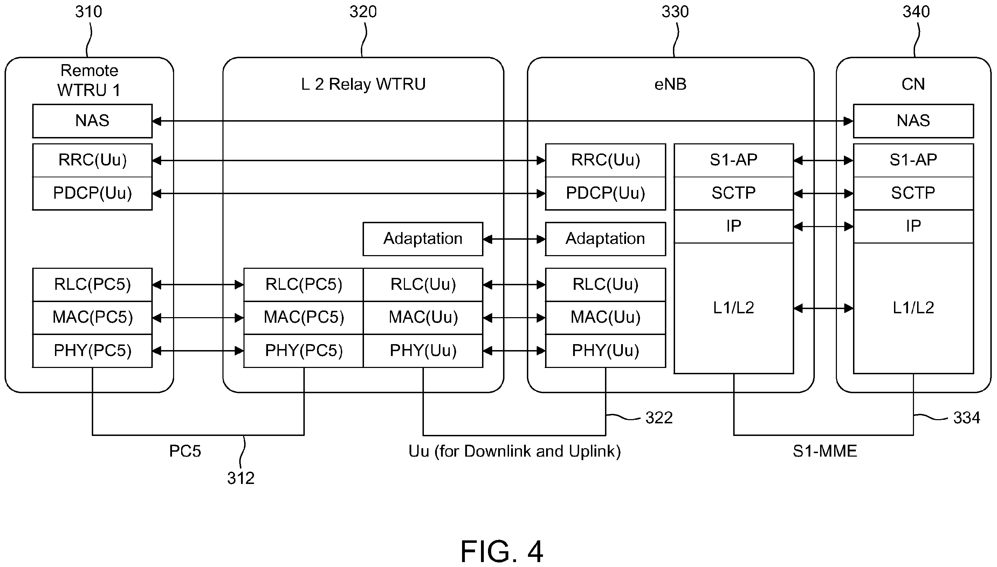

FIG. 3 illustrates an example user plane radio protocol stack for layer 2 evolved User Equipment (UE)-to-Network relay (PC5), between a remote WTRU 310, a relay WTRU 320, an eNB 330 and core network 340. Communication between the remote WTRU 310 and the relay WTRU is at the physical layer PC5 (321). Communication between the relay WTRU 320 and the eNB 330 is the physical layer Uu (322). Communication between the eNB and the CN is by S1-U/S5/S8 (332). FIG. 4 illustrates an example control plane radio protocol stack for layer 2 evolved UE-to-Network relay (PC5). WTRU-to-Network relays for commercial use cases tailored to wearables and loT devices may be performed in RAN. Contrary to ProSe WTRU-to-Network relays which uses a L3 (e.g., IP layer) relaying approach, the WTRU-to-Network relays for wearables may use a L2 relay (332, 334) based on the protocol stacks as illustrated in FIG. 3 and FIG. 4.

Relay embodiments may be based on a one to one communication link established at upper layers (ProSe layer) between two WTRUs (e.g., the remote WTRU and WTRU-to-Network relay). Such connection may be transparent to the AS layer and connection management signaling and procedures performed at the upper layers may be carried by AS layer data channels. The AS layer may be unaware of such a one to one connection.

In NR V2X the AS layer may support the notion of a unicast link between two WTRUs. Such unicast link may be initiated by upper layers (as in the ProSe one-to-one connection). However, the AS layer may be informed of the presence of such unicast link, and any data that may be transmitted in unicast fashion between the peer WTRUs. With such knowledge, the AS layer can support HARQ-feedback, CQI feedback, and power control schemes which are specific to unicast.

A unicast link at the AS layer may be supported via a PC5-RRC connection. The PC5-RRC connection may be defined as follows: The PC5-RRC connection is a logical connection between a pair of a Source Layer-2 ID and a Destination Layer-2 ID in the AS. One PC5-RRC connection is corresponding to one PC5 unicast link. The PC5-RRC signaling can be initiated after its corresponding PC5 unicast link establishment. The PC5-RRC connection and the corresponding sidelink SRBs and sidelink DRBs are released when the PC5 unicast link is released as indicated by upper layers. For each PC5-RRC connection of unicast, one sidelink SRB is used to transmit the PC5-S messages before the PC5-S security has been established. One sidelink SRB is used to transmit the PC5-S messages to establish the PC5-S security. One sidelink SRB is used to transmit the PC5-S messages after the PC5-S security has been established, which is protected. One sidelink SRB is used to transmit the PC5-RRC signaling, which is protected and only sent after the PC5-S security has been established.

PC5-RRC signaling may include a sidelink configuration message (e.g., *RRCReconfigurationSidelink*) where one WTRU configures the RX-related parameters of each sideling radio bearer (SLRB) in the peer WTRU. Such reconfiguration message can configure the parameters of each protocol in the L2 stack (e.g., SDAP, PDCP, etc.). The receiving WTRU can confirm or reject such configuration, depending on whether it can support the configuration suggested by the peer WTRU.

In embodiments, a WTRU (e.g., WTRU-to-WTRU relay WTRU) is (pre-)configured with some or all of the following conditions to transmit/forward a discovery message:
1) Range of SD-RSRP from parent node and/or the range of distance to the parent node per QoS of the relay_service.
2) The WTRU is (pre-)configured to check Uu RSRP (reference signal received power) as a condition if it is in coverage; otherwise, it checks the distance to gNB as a condition. For example
   2a) In embodiments, range of Uu RSRP per hop to gNB per QoS of the relay service is checked. For example, for one QoS level, the WTRU can be a WTRU-to-Network relay if Thre1 ≥ Uu RSRP > Thre2 and it can be the first intermediate WTRU-to-WTRU relay if Thre2 ≥ Uu RSRP ≥ Thre3. Otherwise, if Uu RSRP < Thre3 (e.g., the WTRU is out of coverage (OOC)), it can be an intermediate relay.
   2b) In further embodiments, range of distance to gNB per number of hops to gNB per QoS of the relay service is checked.

In embodiments, if the WTRU does not satisfy condition(s) to become a WTRU-to-Network relay (e.g., it can be WTRU-to-WTRU relay only). The following actions are performed:
1) In embodiments, the WTRU monitors discovery transmission from a parent node and performs the following for each detected discovery message, wherein each discovery message includes any or all of: the path information, hop count to gNB, the location information (e.g., zone ID, coordinate) of the parent node and the gNB, and the QoS of the relay service.
   1a) The WTRU determines the number of hops to reach a gNB.
   1b) The WTRU measures SD-RSRP, and calculates distances to the parent node and to the gNB.
2) The discovery message sent by the WTRU can include the following information:
   2a) If the WTRU has on going connection with gNB, the WTRU may include the current path. Otherwise, the WTRU may include the shortest path based on the detected discovery announcement from other nodes.
   2b) The path status (e.g., whether the WTRU has on going connection with gNB or not).
3) For discovery transmission, if the WTRU is in network coverage (e.g., Uu RSRP >Thre3), in embodiments, the WTRU checks the Uu RSRP as a condition. Otherwise, the WTRU checks the distance to gNB as a condition.
4) In embodiments, the WTRU triggers discovery announcement transmission if the (pre-)configured conditions are satisfied and/or it receives indication from parent node to transmit discovery.

In further embodiments, a WTRU (e.g., WTRU-to-WTRU relay WTRU) is (pre-)configured with the following conditions to forward a discovery message:
1) Range of SD-RSRP from a child node and/or the range of distance to the child node per QoS of the relay service.
2) The WTRU is (pre-)configured to check Uu RSRP condition if it is in coverage; otherwise, it checks the distance to gNB condition as follows:
   2a) In embodiments, the WTRU checks the range of Uu RSRP per hop to gNB per QoS of the relay service. For example, for one QoS service, the WTRU can be a WTRU-to-Network relay if Thre1 ≥ Uu RSRP > Thre2 and it can be the first intermediate WTRU-to-WTRU relay if Thre2 ≥ Uu RSRP ≥ Thre3. Otherwise, if Uu RSRP < Thre3 (e.g., the WTRU is OOC), it can be any intermediate relay.
   2b) In embodiments, the WTRU checks the range of distance to gNB per number of hops to gNB per QoS of the relay service.

In further embodiments, a WTRU (e.g., WTRU-to-WTRU relay WTRU) monitors a discovery solicitation message from child WTRUs (e.g., remote WTRU) and a discovery announcement message from a parent node (e.g., WTRU-to-Network relay).

If the WTRU has on going connection with the gNB, for each detected discovery solicitation message, the WTRU determines the number of remaining hops to reach the gNB based on the indication in the message. The WTRU forwards the path information of the detected discovery message to the parent node using PC5-RRC if the number of hops to the gNB is smaller than the remaining hops in the discovery solicitation message.

Otherwise, if the WTRU does not have on going connection with the gNB, the WTRU determines the shortest path to gNB based on the detected discovery announcement message from parent nodes and forwards the path information of the detected discovery message using discovery solicitation message if the conditions to transmit discovery solicitation message as a function of the number of hops in the shortest path are satisfied (e.g., Uu RSRP condition if the WTRU is in coverage and distance to gNB condition if the WTRU is out of network coverage).

Embodiments for discovery transmission are described herein.

In embodiments, a WTR performs discovery monitoring. In one embodiment, the WTRU determines whether to monitor discovery transmissions from other WTRUs for multi-hop relay. For example, for model A discovery, the WTRU determines to monitor discovery resource pool if the WTRU does not satisfy the condition to be a WTRU-to-Network relay. Specifically, if Uu RSRP becomes smaller than a (pre-)configured threshold, the WTRU triggers discovery monitoring to monitor discovery transmission from a WTRU-to-Network to offer WTRU-to-WTRU relay service to remote WTRUs.

In embodiments, a first WTRU decodes discovery messages from other WTRUs. The first WTRU performs one or any combination of the trigger discovery transmission procedure and trigger relay (re)selection procedure upon reception of discovery messages from the other WTRUs.

In embodiments, the first WTRU performs a trigger discovery transmission procedure, for example, the first WTRU (e.g., WTRU-to-WTRU relay) monitors discovery messages from the child/parent node (e.g., WTRU-to-Network relay) to transmit a discovery message and conveys the child/parent node information to the remote WTRUs to offer the WTRU-to-WTRU relay service to the remote WTRUs.

In embodiments, the first WTRU performs a trigger relay (re)selection procedure, for example, the WTRU (e.g., remote WTRU) has an on-going connection with a WTRU-to-WTUR relay connecting directly to a WTRU-to-Network relay. The WTRU monitors discovery messages from other WTRUs. The WTRU triggers relay (re)selection if it detects a discovery message from a WTRU-to-Network relay. The WTRU triggers relay (re)selection by switching from the existing path to the new path if the discovery messages from the WTUR-to-Network relay satisfies a set of condition(s) (e.g., SL-RSRP is greater than a threshold).

In embodiments, a WTRU determines the QoS of the relay service. In embodiments, the QoS of the relay service includes each hop QoS (hop-by-hop QoS) and the QoS from the source to the destination (i.e., end-to-end QoS). The QoS parameters include one or any combination of the priority associated with the relay service, the latency associated with the relay service, and the reliability associated with the relay service. In embodiments, the priority associated with the relay service is determined based on the priority of the established SLRB/LCH from tone or multiple nodes in the relay path. In embodiments, the latency associated with the relay service is determined based on the latency associated with one hop and the maximum number of hops allowed from the source to the destination. In embodiments, the reliability associated with the relay service is determined based on the reliability associated with one hop and the maximum number of hops allowed from the source to the destination.

In embodiments, a WTRU determines the QoS of the discovery message. In one embodiment, the QoS of the discovery message includes one or any combination of the parameters such as the priority of the message, the reliability of the message, and the latency requirement of the message.

In embodiments, a WTRU indicates the relay type in the discovery message. In one embodiment, the WTRU transmits a discovery message. In embodiments, the WTRU indicates its relay type (e.g., WTRU-to-WTRU relay, WTRU-to-Network relay, the number of hops to the source/destination, etc.) in the discovery message to offer relay service to another WTRU. In embodiments, the WTRU indicates whether it is a WTRU-to-WTRU relay and/or WTRU-to-Network relay. In one embodiment, the WTRU transmits a discovery message to indicate that it can be an WTRU-to-Network relay. In another embodiment, the WTRU transmits a discovery message to indicate it can be a WTRU-to-WTRU relay. In another embodiment, the WTRU transmits a discovery message to indicate that it can be either a WTRU-to-WTRU relay or an WTRU-to-Network relay. In embodiments, the indication is implicitly or explicitly indicated in the discovery message.

In embodiments, a WTRU determines its relay type. In one embodiment, the WTRU determines its relay type (e.g., WTRU-to-WTRU relay, WTRU-to-Network relay) based on one or any combination of the following:
1) The (pre-)configuration. For example, the WTRU is (pre-)configured to be a WTRU-to-WTRU and/or WTRU-to-Network relay. The WTRU then determines its relay type based on such (pre-)configuration.
2) The shortest path to the source/destination node (e.g., gNB). For example, the WTRU determines whether to be a WTRU-to-Network relay or WTRU-to-WTRU relay. In embodiments, the WTRU is prioritized to be a U2N relay. If the condition to be a U2N relay is not satisfied, then, the WTRU then determines to be a WTRU-to-WTRU relay.
3) The detection of the parent/child node. In embodiments, the WTRU determines to be a WTRU-to-WTRU relay of a U2N relay if it detects discovery messages from a U2N relay.
4) The measured Uu RSRP. In embodiments, the WTRU determines to be a U2N relay if its measured Uu RSRP is within a (pre-)configured range. The WTRU determines to be a WTRU-to-WTRU relay connecting directly to a U2N relay if its measured Uu RSRP is within another Uu RSRP range.
5) The coverage status of the WTRU. In embodiments, the WTRU determine to be a U2N relay if it is in coverage, and it determines to be a WTRU-to-WTRU relay connecting to a U2N relay if it is out of coverage.
6) Uu RRC state of the WTRU. In embodiments, the WTRU determines to be a WTRU-to-Network relay if it is in RRC_CONNECTED. Otherwise, the WTRU determines to be a WTRU-to-WTRU relay connecting directly to a WTRU-to-Network relay if it is in RRC Idle/inactive mode.

In embodiments, a WTRU determines whether to transmit a discovery message. In one embodiment, the WTRU determines whether to transmit a discovery message based on one or any combination of the following: the (pre-)configured number of hops to the gNB; the remaining number of hops and/or the remaining delay to reach the source/destination node; the availability of the parent/child node; the measured Uu RSRP; the measured SL RSRP; the distance to the parent/child node and/or the distance to the source/destination node; the distance to gNB; the coverage status of the WTRU; QoS of the relay service; indication from the child/parent node; the connection status to a child/parent node; the load of the WTRU; the cell ID; and/or the PLMN ID.

In embodiments, a WTRU determines whether to transmit a discovery message based on the (pre-)configured number of hops to the gNB. In one embodiment, the WTRU determines whether to transmit a discovery message based on the (pre-)configured relay type. In embodiments, the WTRU is (pre-)configured to be a WTRU-to-Network relay only. The WTRU then determines whether to transmit a discovery message based on the conditions to be a WTRU-to-Network relay. In embodiments, the WTRU is (pre-)configured to be a WTRU-to-WTRU relay WTRU. The WTRU then determines whether to transmit a discovery message based on the conditions to be a WTRU-to-WTRU relay. The conditions include some or all of: the availability of a source/destination node, the Uu RSRP, etc. In embodiments, the WTRU is (pre-) configured to be a relay regardless of whether it is a WTRU-to-WTRU or WTRU-to-Network relay. The WTRU then determines whether to transmit a discovery message based on the conditions to transmit a discovery to be a WTRU-to-Network relay or the conditions to transmit a discovery to be a WTRU-to-WTRU relay.

In embodiments, a WTRU determines whether to transmit a discovery message based on the remaining number of hops and/or the remaining delay to reach the source/destination node. In embodiments, the WTRU receives a discovery message from a parent/child node, the WTRU determines whether to transmit a discovery message to forward the discovery information for the parent/child node based on the number of remaining hops and/or the remaining delay for the discovery message, which is indicated in the discovery message received from the parent/child node. In embodiments, the WTRU determines the remaining delay and/or the remaining number of hops for a discovery message based on the discovery message received from the parent/child node. In embodiments, if the remaining delay and/or the remaining number of hops is smaller than a threshold, the WTRU does not transmit the discovery message; otherwise, if the remaining delay and/or the remaining number of hops is greater than the threshold, the WTRU transmits the discovery message.

For example, the WTRU receives a discovery message from an WTRU-to-Network relay. The WTRU determines whether to transmit a discovery message to forward the discovery information from the WTRU-to-Network relay based on the maximum number of hops the WTRU-to-Network relay wants to reach the destination/source WTRU, which is implicitly or explicitly indicated in the discovery message from the WTRU-to-Network relay. If the discovery message indicates that WTRU-to-WTRU relay is disabled (i.e., WTRU-to-Network relay only serve remote WTRUs), the WTRU will not transmit a discovery message to forward the discovery information from the WTRU-to-Network relay; otherwise, the WTRU will transmit the discovery message to forward the discovery information from the WTRU-to-Network relay.

In embodiments, the WTRU determine whether to transmit a discovery message based on the availability of the parent/child node. In embodiments, if the WTRU determines that it is not allowed to be an WTRU-to-Network relay, the WTRU determines whether it can be an WTRU-to-WTRU relay to relay message from/to another WTRU-to-Network relay based on the availability of one or multiple parent/child nodes. In embodiments, for a model A discovery procedure, the WTRU determines to transmit a discovery message if it detects a suitable WTRU-to-Network relay; otherwise, the WTRU will not transmit a discovery message. In embodiments, the WTRU determines whether it detects a suitable WTRU-to-Network relay by decoding the discovery messages from an WTRU-to-Network relay. In embodiments, for a model B discovery procedure, the WTRU determines to transmit a discovery message if it detects a suitable remote WTRU; otherwise, if the WTRU does not detect a remote WTRU, the WTRU will not transmit a discovery message. In another embodiment, the WTRU determines to transmit a discovery message if it detects one suitable child WTRU and another suitable parent WTRU; otherwise, the WTRU will not transmit a discovery message.

In embodiments, a WTRU determines whether to transmit a discovery message based on its measured Uu RSRP. In embodiments, the WTRU is (pre-)configured with multiple Uu RSRP ranges, in which each range is associated with one type of the discovery message, the number of hops to the gNB, the QoS of the relay service, and/or the number of hops to the source/destination node. The WTRU determines which Uu RSRP range to apply based on the number of hops to the gNB, and/or the number of hops to the source/destination nodes. The WTRU transmits the discovery message if the measured Uu RSRP is within the range. Otherwise, the WTRU will not transmit the discovery message.

In one example, as illustrated in FIG. 2, for model A discovery, WTRUs are (pre-)configured with multiple (e.g., two) Uu RSRP ranges, in which the first range (212-214) is used when the WTRU transmits a discovery message to be an WTRU-to-Network relay (e.g., directly connect to the gNB), and the second range (214-216) is used when the WTRU transmits a discovery message to be an WTRU-to-WTRU relay (e.g., the WTRU is not directly connect to the gNB). The WTRU then determines whether to transmit a discovery message based on whether the WTRU targets to be an WTRU-to-WTRU relay or WTRU-to-Network relay and whether the measured Uu RSRP is within the associated range. Specifically, if the Uu RSRP is within the first range (e.g., Thres2<Uu RSRP< Thres1), the WTRU (e.g. 220, 222) transmits a discovery message (e.g. 220a, 222a) to serve as an WTRU-to-Network relay. Otherwise, if the Uu RSRP is within the second range (e.g., Thres3<Uu RSRP< Thres2), the WTRU (e.g. 230, 232) transmits a discovery message (e.g. 230a 232a) to serve as an WTRU-to-WTRU relay.

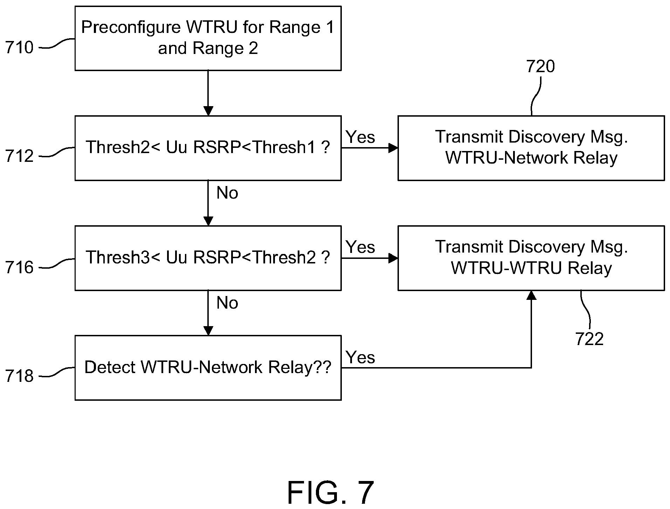

An example of the foregoing embodiment is described in flow diagram FIG. 7 as follows: Instep 710 one example, a WTRU is (pre-)configured with multiple (e.g., two) Uu RSRP ranges, in which Range 1 is used when the WTRU transmits a discovery message to be an WTRU-to-Network relay (e.g., directly connect to the gNB), and Range 2 is used when the WTRU transmits a discovery message to be an WTRU-to-WTRU relay (e.g., the WTRU is not directly connect to the gNB)., At Step 712, the WTRU determines whether the Uu RSRP is within the first range (e.g., Thres2<Uu RSRP< Thres1). IF the answer is yes, then at step 720, the WTRU transmits a discovery message to serve as an WTRU-to-Network relay. If the answer is no, then at step 716, the WTRU determines whether the Uu RSRP is within the second range (e.g., Thres3<Uu RSRP< Thres2). If the answer is yes, then at step 722, the WTRU transmits a discovery message to serve as an WTRU-to-WTRU relay. In embodiments, as shown for example at step 718, the WTRU additionally determines whether to transmit a discovery message to serve as an WTRU-to-WTRU based on whether it detects a WTRU-to-Network relay. If the answer is yes, at step 722, the WTRU transmits a discovery message to serve as an WTRU-to-WTRU if it detects a WTRU-to-Network relay; otherwise, it will not transmit the discovery message.

In another embodiment, a WTRU determines whether to transmit a discovery based on the SL RSRP of the sidelink channel between the WTRU and the child node and/or the sidelink channel between the WTRU and the parent node. Specifically, the WTRU transmits the discovery message if the SL RSRP of the slidelink channel between the WTRU and the child node and/or the sidelink channel between the WTRU and the parent node is greater than a threshold. In embodiments, the SL RSRP threshold is (pre-)configured per sidelink hop.

In another embodiment, the WTRU determines whether to transmit a discovery message based on the distance to the parent/child node and/or the distance to the source/destination node. In embodiments, the WTRU is (pre-)configured a distance range to the parent/child node and/or a distance range to the source/destination node to be a relay. The WTRU then determines whether to transmit a discovery message to offer service to the remote WTRU based on the distance between the WTRU and the child/parent node and/or based on the distance between the WTRU and the source/destination node. In embodiments, the WTRU transmits the discovery message and in embodiments conveys the information about the source/destination node and/or the parent/child node if the distance between the WTRU and the source/destination node and/or the distance between the WTRU and the parent/child node is within a (pre-)configured range.

In another embodiment, the WTRU determines whether to transmit a discovery message based on the distance to the gNB. Specifically, the WTRU is be (pre-)configured one or multiple ranges of distance to the gNB to determine whether it is allowed to transmit a discovery message. Each range of distances is a function of the number of hops to the gNB, the QoS of the relay service, and/or the QoS of the discovery message. The WTRU then determines whether to transmit a discovery message based on the distance to the gNB, the number of hops to the gNB, the QoS of the relay service, and/or the QoS of the discovery message.

In embodiments, for one QoS of a relay service, the WTRU is (pre-)configured for two ranges of distances, in which the first range is used when the WTRU is a WTRU-to-Network relay, and the second range is used when the WTRU is a WTRU-to-WTRU relay connecting directly to a WTRU-to-Network relay. The WTRU then determines whether to transmit a discovery message based on the distance to the gNB and the number of hops to gNB (e.g., whether the WTRU is a WTRU-to-Network relay or a WTRU-to-WTRU relay connection directly to a WTRU-to-Network relay). For example, the WTRU transmit a discovery message to become a WTRU-to-Network relay if the distance to the gNB is within the first range.

In another embodiment, the WTRU determines whether to transmit a discovery message based on the coverage status of the WTRU. For example, the WTRU transmits a discovery message to be a WTRU-to-WTRU relay if the WTRU is out of network coverage; however, if the WTRU is within the network coverage, the WTRU transmits a discovery message to be a WTRU-to-Network relay. If the WTRU is be (pre-)configured to be a WTRU-to-WTRU relay, the WTRU is allowed to transmit a discovery message if it is out of network coverage; otherwise, if the WTRU is in network coverage, the WTRU is not allowed to transmit discovery message to be a WTRU-to-WTRU relay.

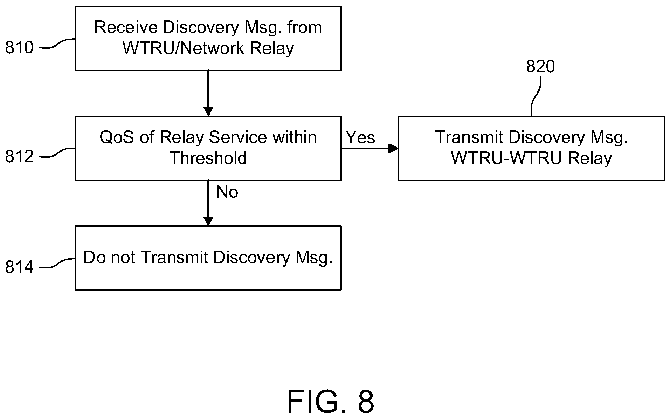

In another embodiment, an example of which is illustrated in FIG. 8, the WTRU determines whether to transmit a discovery message based on the QoS of the relay service. At step 810, the WTRU receives the discovery message from a WTRU-to-Network relay. At step 812, the WTRU determines whether to transmit a discovery message to be a WTRU-to-WTRU relay of the WTRU-to-Network relay based on the QoS of the relay service indicated in the discovery message. In embodiments, the WTRU determines to transmit the discovery message if the QoS of the relay service is within one range at step 820; otherwise, at step 814 the WTRU determines not to transmit the discovery message to be a WTRU-to-WTRU relay of the WTRU-to-Network relay. In embodiments, the QoS range is further (pre-)configured based on other parameters such as SL-RSRP, the load of the WTRU, etc.

In another embodiment, the WTRU determines whether to transmit a discovery message based on the indication from the child/parent node. The WTRU can have an on-going connection with the child/parent node. The WTRU then receives an indication from the child/parent node to transmit a discovery message. The indication is conveyed to the WTRU via SCI, MAC CE, or PC5 RRC. The WTRU then triggers discovery transmission based on the indication from the child/parent node.

In another embodiment, the WTRU determines whether to transmit a discovery message based on the connection status to a child/parent node. The WTRU may have an on-going connection with the child/parent node. The WTRU may then receive an indication from the child/parent node to transmit discovery message. The indication may be conveyed to the WTRU via SCI, MAC CE, or PC5 RRC. The WTRU may then trigger discovery transmission based on the indication from the child/parent node. The discovery message may include the information about the child/parent node such as the ID information of the source/destination node (e.g., WTRU ID, cell ID, or PLMN ID).

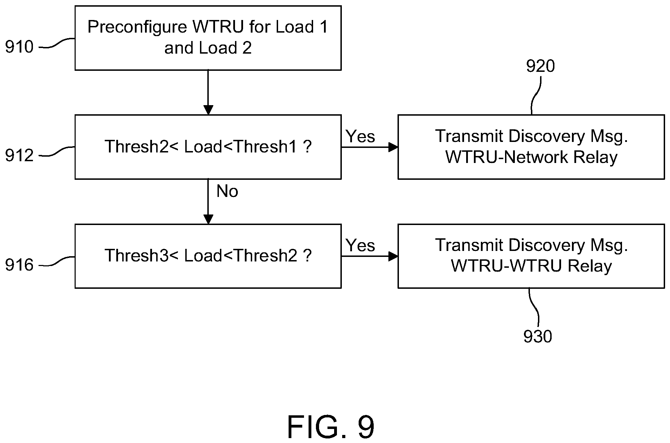

In another embodiment, an example if which is illustrated in FIG. 9, the WTRU determines whether to transmit a discovery message based on the load of the WTRU. In embodiments, at step 910, the WTRU is (pre-)configured with one or multiple load thresholds, in which each of the thresholds is associated with one type of relay. The WTRU then determines whether to transmit a discovery message or not based on its relay type and its load. In embodiments, the WTRU is (pre-)configured with three load thresholds, in which the load level between a first threshold (Thresh 1) and a second threshold (Thresh 2) is associated with WTRU-to-Network relay, and the load level between a second threshold (Thresh 2) and a third threshold (Thresh 3) is associated with WTRU-to-WTRU relay. At step 912, the WTRU determines whether the load is between the first and second thresholds. If the answer is yes, then at step 920, the WTRU transmits a discovery message indicating availability as a WTRU-to-Network relay). If the answer is no, then at step 916, the WTRU determines whether the load is between the second threshold and a third threshold. If the answer is yes, then at step 930, the WTRU transmits a discovery message indicating availability as a WTRU-to-WTRU relay. While not shown, in FIG. 9, if the load level is above the third threshold, in embodiments, the WTRU does not send a discovery message. In embodiments, the WTRU is (pre-)configured with two load thresholds. For loads between a first threshold and a second threshold, the WTRU sends a discovery message indicating availability as a WTRU-Network relay and for loads above the second threshold the WTRU sends a discovery message indicating availability as a WTRU-WTRU relay. In embodiments, the WTRU is (pre-)configured with one load threshold. For loads below a first threshold, the WTRU sends a discovery message indicating availability as a WTRU-Network relay and for loads above the first threshold the WTRU sends a discovery message indicating availability as a WTRU-WTRU relay.

In embodiments, an WTRU determines which conditions to check before discovery transmission based on the coverage status of the WTRU. In one embodiment, the WTRU is (pre-)configured with multiple sets of conditions to perform discovery transmission, each set of conditions is determined based on one or any combination of the coverage status of the WTRU and the Uu RRC status of the WTRU.

For the coverage status of the WTRU, the WTRU is (pre-)configured two set of conditions to transmit discovery, in which the first set of conditions may be required if the WTRU is in the network coverage and the another set of conditions is required when the WTRU is out of network coverage. The WTRU determines which set of conditions to transmit discovery message based on the coverage status of the WTRU. If the WTRU is in the network coverage, the WTRU checks the first set of conditions, and if the WTRU is out of network coverage, the WTRU checks the second set of conditions. For example, for in network coverage scenario, in embodiments, the WTRU is required to check the Uu RSRP conditions (e.g., Uu RSRP should be within a (pre-)configured range). The WTRU then determines whether to transmit discovery message based on the Uu RSRP. However, when the WTRU is out of network coverage, the WTRU is required to check the distance to the gNB (e.g., distance to the gNB is within a (pre-)configured range). The WTRU then determines whether to transmit discovery message based on the distance to the gNB.

For the Uu RRC status of the WTRU, for example, the WTRU is (pre-)configured with two set of conditions to check in which the first set of conditions i required if the WTRU is in RRC connected mode and the second set of conditions is required if the WTRU is in RRC idle/inactive mode. The WTRU then determines which set of conditions to check based on the RRC status of the WTRU.

In an embodiment, the WTRU is (pre-)configured to be either a WTRU-to-Network or a WTRU-to-WTRU relay. The WTRU is (pre-)configured with two ranges of Uu RSRP in which the first range of Uu RSRP is the condition to be a WTRU-to-Network relay and the second range of Uu RSRP is the condition to be a WTRU-to-WTRU relay. The WTRU first determines whether it can be a WTRU-to-Network relay or not based on the Uu RSRP. Specifically, if Uu RSRP is within the first Uu RSRP range, the WTRU determines to be a WTRU-to-Network relay, and it transmits the discovery message to offer WTRU-to-Network relay service to other remote WTRUs. Otherwise, if Uu RSRP is not within the first range, the WTRU determines that it is not able to be an WTRU-to-Network relay. The WTRU then checks if Uu RSRP is within the second range or not. If the Uu RSRP is not within the second range, the WTRU determines that it is not able to be either WTRU-to-Network relay or WTRU-to-WTRU relay. Otherwise, if Uu RSRP is within the second range, the WTRU determines that it can be a WTRU-to-WTRU relay. In embodiments, the WTRU performs discovery monitoring to detect the availability of a WTRU-to-Network relay. If the WTRU detects a WTRU-to-Network relay, the WTRU determines to transmit a discovery message to be an WTRU-to-WTRU relay connecting to the WTRU-to-Network relay. In embodiments, the WTRU includes the information of the detected WTRU-to-Network relay in the discovery message.

In another exemplary embodiment, the WTRU is (pre-)configured to be either a WTRU-to-Network or a WTRU-to-WTRU relay. The WTRU is (pre-)configured with one range of Uu RSRP as a condition to be a WTRU-to-Network relay. The WTRU is further (pre-)configured with the one range of distance to gNB as a condition to be a WTRU-to-WTRU relay. The WTRU first determines whether it can be a WTRU-to-Network relay or not based on the Uu RSRP. If Uu RSRP is within the first Uu RSRP range, the WTRU determines to be a WTRU-to-Network relay, and it transmits the discovery message to offer WTRU-to-Network relay service to other remote WTRU. If the WTRU does not satisfy the condition to be a WTRU-to-Network relay, the WTRU then monitors discovery to detect the availability of a WTRU-to-Network relay. The WTRU then receives the location information of the source/destination node (e.g., gNB) from a discovery message transmitted from a WTRU-to-Network relay. The WTRU may then determine whether to be a WTRU-to-WTRU relay connecting directly to the WTRU-to-Network relay based on the distance between the WTRU and the gNB. Specifically, if the distance is within the (pre-)configured range, the WTRU may be a WTRU-to-WTRU relay; otherwise, the WTRU may not be a WTRU-to-Network relay. The WTRU may then transmit discovery message and may include the information about the gNB and the WTRU-to-Network relay in the discovery message to offer the relay service to the remote WTRU.

In embodiments, a WTRU determines the information to include in a discovery message. In embodiments, a WTRU includes one or any combination of the following information in the discovery message:
1) The set of remote WTRUs. In embodiments, a WTRU (e.g., relay WTRU) detects a discovery solicitation message from one or multiple remote WTRUs. The WTRU then determines to generate a discovery message to forward the remote WTRU information for another relay (e.g., WTRU-to-Network relay) or gNB.
2) The set of child/parent nodes. In embodiments, for model A discovery, the WTRU indicates the set of parent node(s) in the discovery message. For model B, the WTRU indicates the set of remote WTRU(s) in the discovery message. For other models, the WTRU indicates the set of both parent node(s) and child node(s) in the discovery message.
3) One or multiple paths to reach gNB. In embodiments, if the WTRU is the WTRU-to-WTRU relay, the WTRU indicates one or multiple paths to reach gNB in the discovery message. The path includes the information about the gNB and the WTRU-to-Network relay.
4) The connection status of the WTRU and/or other WTRUs in the path. In embodiments, the WTRU indicates whether it has an on-going path to the source (e.g., gNB) and the information about the path (e.g., WTRU-to-Network ID and cell ID).
5) Uu RRC status of the WTRU and/or other WTRUs in the path.
6) The number of hops to reach the gNB.
7) The number of hops to reach the source/destination node.
8) Location of the gNB.
9) Location of the WTRU.
10) Discovery model. In embodiments, the WTRU indicates in the discovery message whether the WTRU is using Model A, B, or combination of model A and model B. In embodiments, for the combination of model A and model B, the WTRU further includes the information about both child and parent node(s) in the discovery message.
11) Required QoS of the relay service. In embodiments, this can include either hop-by-hop QoS and/or end-to-end QoS.
12) QoS of the discovery message.

In embodiments, the WTRU determines which information to include in the discovery message. In embodiments, the WTRU determines which information to include in the discovery message based on one or any combination of the following:
1) The type of relay (e.g., WTRU-to-Network relay or WTRU-to-WTRU relay). In embodiments, if the WTRU is the WTRU-to-WTRU relay, the WTRU includes information related to the WTRU-to-Network relay in the discovery message. If the WTRU is the WTRU-to-Network relay, the WTRU includes the information about the gNB in the discovery message (e.g., the cell ID, location of the gNB, etc.).
2) Whether the WTRU has an on-going connection with the source/destination node. In embodiments, if the WTRU has on-going connection with the source/destination node, the WTRU indicates such information in the discovery message. In embodiments, the WTRU indicates the path to the source/destination in the discovery message. For example, if the WTRU has on-going connection with the WTRU-to-Network relay, the WTRU indicates the ID of the WTRU-to-Network relay in the discovery message.
3) Whether the WTRU has an on-going connection with the parent/child node. In embodiments, if the WTRU has an on-going connection with the child/parent node, the WTRU indicates such information in the discovery message. In embodiments, the WTRU indicates the path to the source/destination in the discovery message.
4) Discovery model. In embodiments, for discovery model A, the WTRU includes information about the gNB and the parent nodes. For discovery model B, the WTRU includes information about the child node. For other discovery models (e.g., combination of model A and B), the WTRU includes information about both the child and the parent node.

In embodiments, a WTRU determines whether to include one child/parent node in the discovery message. In embodiments, the WTRU determines whether to include one child/parent node in the discovery message based on one or any combination of the following:
1) The maximum number of child/parent nodes to be included in a discovery message. In embodiments, the WTRU is (pre-)configured to include maximum number of child/parent nodes in the discovery message. The WTRU then determines which child/destination node in the discovery message based on highest SL-RSRP until the number of child/destination node included in the discovery message reaches the maximum number of the child/parent node.
2) SL-RSRP between the child/parent node and the WTRU. In embodiments, the WTRU is (pre-)configured with a SL-RSRP range (e.g., a minimum and/or maximum SL-RSRP) in the sidelink channel between the WTRU and the child/parent node to include the child/parent node in the discovery message. The WTRU may then determine whether to include a child/parent node in the discovery message based on the sidelink channel between the WTRU and the child/parent node. In embodiments, if SL RSRP between the child/parent node and the WTRU is within the range, the WTRU includes the child/parent node in the discovery message; otherwise, the WTRU does not include the child/parent node in the discovery message.
3) The distance between the child/parent node and the WTRU. In embodiments, the WTRU is (pre-)configured with a distance range (e.g., a minimum and/or maximum distance) between the WTRU and the child/parent node to include the child/parent node in the discovery message. The WTRU then determines whether to include a child/parent node in the discovery message based on the distance between the WTRU and the child/parent node. If the distance between the child/parent node and the WTRU is within the range, the WTRU includes the child/parent node in the discovery message; otherwise, if the distance is outside of the (pre-)configured distance range, the WTRU does not include the child/parent node in the discovery message.
4) The required QoS of the relay service. In embodiments, the WTRU determines whether to include the child/parent node in the discovery message based on the QoS requirement of the relay service. In embodiments, the WTRU is (pre-)configured with a QoS range to determine whether to include the child/parent node in the discovery message. The QoS requirement of the relay service is conveyed in the discovery message. The WTRU then determines whether to include the child/parent node in the discovery message based on the QoS requirement of the relay service. In embodiments, the WTRU includes the child/parent node in the discovery message if the QoS requirement of the relay service is within the (pre-)configured required QoS; otherwise, the WTRU does not include the child/parent node in the discovery message.

In embodiments, a WTRU determines the QoS of the relay service. In embodiments, the WTRU determines the hop-by-hop QoS of the relay service. The WTRU determines the QoS of the relay service in the next hop based on the required QoS in the current hop, the maximum number of hops and/or the end-to-end QoS of the relay service. In embodiments, the WTRU is a WTRU-to-WTRU relay, which connects directly to the WTRU-to-Network relay and a remote WTRU. The WTRU receives a discovery message from a remote WTRU for model B discovery. The WTRU then determines the required QoS of the relay service in the hop between itself and the WTRU-to-Network relay based on the end-to-end required QoS, the required QoS in the hop between the WTRU and the remote WTRU and the 3-hop relay service. In embodiments, the WTRU may equally split end-to-end latency among each hop.

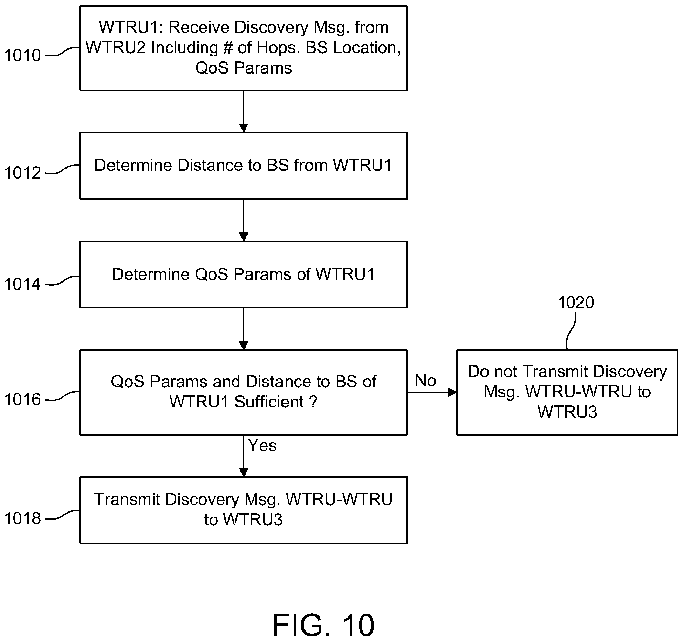

In embodiments, an example of which is shown in FIG. 10, at step 1010, a first WTRU (WTRU1) receives, from a second WTRU (WTRU2), a discovery message that includes a number of hops to a base station (BS) from the second WTRU, a location of the BS, and quality of service (QoS) parameters of the second WTRU. At step 1012, based on the location of the BS, a distance to the BS from the first WTRU is determined. In embodiments, the determined distance to the BS is within a preconfigured allowed range of distances, wherein the preconfigured allowed range of distances is associated with a number of hops from the first WTRU; At step 1014, based on the QoS parameters of the second WTRU, a relay load of the first WTRU, and side link (SL) reference signal received power (SL RSRP) of the received discovery message QoS parameters of the first WTRU for a relay service provided by the first WTRU are determined. At step 1016, WTRU1 determines whether the QoS parameters of the first WTRU and the determined distance to the BS are within preconfigured limits. If the answer is yes, then at step 1018, WTRU1 transmits to a third WTRU (WTRU3) a discovery message, which is a WTRU-WTRU discovery message. If the answer is no, at step 1020, WTRU1 does not transmit the discovery message. In further embodiments, the discovery message includes some or all of: a relay type of the first WTRU, a number of hops to the BS from the first WTRU, and the QoS parameters of the first WTRU, and a location of the BS. In further embodiments, the QoS parameters of the first WTRU include some or all of: priority information associated with the relay service, latency information associated with the relay service, and reliability information associated with the relay service.

Embodiments for relay selection and re-selection are described herein.

In embodiments, the WTRU (e.g., remote WTRU) determines the transmission latency of a packet. Specifically, the WTRU receives a timestamp in the packet the time, in which the packet is originally transmitted. The WTRU then determines the latency associated with one packet based on the time it decodes the message and the timestamp indicated in the packet. In embodiments, the WTRU indicates the timestamp in a packet. The source/destination node then determines the latency associated with the packet.

In embodiments, the WTRU determines the quality of the path based on one or any combination of: the number of hops in the path; the minimum RSRP (SL-RSRP or Uu RSRP) of all hops; and/or the average RSRP of all hops.

In embodiments, the WTRU performs the path shorten procedure by doing one or any combination of: monitoring discovery message; transmitting discovery message; triggering relay (re)selection; and/or performing connection establishment with the newly selected node.

In embodiments, the WTRU triggers the path shorten procedure based on one or any combination of the following events:
1) In embodiments, a WTRU receives an indication from the parent/child node to trigger path shorten procedure. For example, one WTRU receives an indication from its child/parent node to perform path shorten procedure. The WTRU then initializes the path shorten procedure to shorten path to the source/destination or to find other source/destination.
2), In embodiments, a WTRU decodes discovery message from another relay having less or equal number of hops to the source/destination compared to the current path. For example, the WTRU monitors discovery messages from other nodes. The WTRU then determines to perform the path shorten procedure if it detects a relay having less or equal number of hops to the source/destination compared to the current path.
3) In embodiments, the SL-RSRP between the WTRU and the source/destination node becomes smaller than a threshold.
4) In embodiments, the load of the WTRU becomes greater/smaller than a threshold.
5) In embodiments, the delay of a packet becomes greater than a threshold.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magnetooptical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method for use in a first wireless transmit / receive unit, WTRU, the method comprising:
receiving (1010), from a second WTRU, a first discovery message that includes an indication of a number of hops to a base station, BS, from the second WTRU, an indication of a location of the BS, and quality of service, QoS, parameters of the second WTRU;
determining (1012), based on the location of the BS, a distance to the BS from the first WTRU, wherein the determined distance to the BS is within a preconfigured allowed range, wherein the preconfigured allowed range is associated with a number of hops from the first WTRU;
determining (1014), based on the QoS parameters of the second WTRU, a relay load of the first WTRU, and side link, SL, reference signal received power, SL RSRP, of the received first discovery message, QoS parameters of the first WTRU for a relay service provided by the first WTRU;
transmitting (1018), based on the QoS parameters of the first WTRU and the determined distance to the BS, to a third WTRU, a second discovery message.

2. The method of claim 1, wherein the QoS parameters of the first WTRU are hop-by-hop QoS parameters or end-to-end QoS parameters.

3. The method of claim 1, wherein the QoS parameters of the second WTRU are hop-by-hop QoS parameters or end-to-end QoS parameters.

4. The method of claim 1, wherein the QoS parameters of the second WTRU include at least one of: priority information associated with the relay service, latency information associated with the relay service, and reliability information associated with the relay service.

5. The method of claim 1, wherein the second discovery message includes at least one of: a relay type of the first WTRU, a number of hops to the BS from the first WTRU, the QoS parameters of the first WTRU, and a location of the BS.

6. The method of claim 5, wherein the relay type of the first WTRU is a WTRU-WTRU relay type or a WTRU-BS relay type.

7. The method of claim 5, wherein the QoS parameters of the first WTRU include at least one of: priority information associated with the relay service, latency information associated with the relay service, and reliability information associated with the relay service.

8. The method of claim 7 wherein the priority associated with the relay service is determined based on a priority of an established sidelink radio bearer logical channel, SLRB/LCH, from tone or multiple nodes in a relay path.

9. The method of claim 7, wherein the latency associated with the relay service is determined based on a latency associated with one hop and a maximum number of allowed hops.

10. The method of claim 7, wherein the reliability associated with the relay service is determined based on a reliability associated with one hop and a maximum number of allowed hops.

11. A wireless transmit / receive unit, WTRU, (102), comprising:
a processor (118), and
a transceiver (120),
the processor and transceiver configured to perform the method of any of claims 1-10.

## Patentansprüche

1. Verfahren zur Verwendung in einer ersten Drahtlos-Sende- und - Empfangseinheit (Wireless Transmit/Receive Unit, WTRU), wobei das Verfahren umfasst:
Empfangen (1010), von einer zweiten WTRU, einer ersten Entdeckungsnachricht, die eine Angabe einer Anzahl von Sprüngen zu einer Basisstation (BS) von der zweiten WTRU, eine Angabe eines Standortes der BS, und Dienstgüteparameter (Quality of Service, QoS-Parameter) der zweiten WTRU enthält;
Bestimmen (1012), auf der Grundlage des Standortes der BS, einer Entfernung zu der BS von der ersten WTRU, wobei die bestimmte Entfernung zu der BS innerhalb eines vorkonfigurierten zulässigen Bereichs liegt, wobei der vorkonfigurierte zulässige Bereich mit einer Anzahl von Sprüngen von der ersten WTRU verknüpft ist;
Bestimmen (1014), auf der Grundlage der QoS-Parameter der zweiten WTRU, einer Weitergabelast der ersten WTRU, und einer Side Link (SL)-Referenzsignalempfangsleistung (SL-RSRP) der empfangenen ersten Entdeckungsnachricht, von QoS-Parametern der ersten WTRU für einen durch die ersten WTRU bereitgestellten Weitergabedienst;
Senden (1018), auf der Grundlage der QoS-Parameter der ersten WTRU und der bestimmten Entfernung zu der BS, einer zweiten Entdeckungsnachricht an eine dritte WTRU.

2. Verfahren nach Anspruch 1, wobei die QoS-Parameter der ersten WTRU Sprung-für-Sprung-QoS-Parameter oder Ende-zu-Ende-QoS-Parameter sind.

3. Verfahren nach Anspruch 1, wobei die QoS-Parameter der zweiten WTRU Sprung-für-Sprung-QoS-Parameter oder Ende-zu-Ende-QoS-Parameter sind.

4. Verfahren nach Anspruch 1, wobei die QoS-Parameter der zweiten WTRU mindestens eines von Prioritätsinformationen, die mit dem Weitergabedienst verknüpft sind, Latenzinformationen, die mit dem Weitergabedienst verknüpft sind, und Zuverlässigkeitsinformationen, die dem Weitergabedienst verknüpft sind, enthalten.

5. Verfahren nach Anspruch 1, wobei die zweite Entdeckungsnachricht mindestens eines von einem Weitergabetyp der ersten WTRU, einer Anzahl von Sprüngen zu der BS von der ersten WTRU, den QoS-Parametern der ersten WTRU, und einem Standort der BS enthält.

6. Verfahren nach Anspruch 5, wobei der Weitergabetyp der ersten WTRU ein WTRU-WTRU-Weitergabetyp oder ein WTRU-BS-Weitergabetyp ist.

7. Verfahren nach Anspruch 5, wobei die QoS-Parameter der ersten WTRU mindestens eines von Prioritätsinformationen, die mit dem Weitergabedienst verknüpft sind, Latenzinformationen, die mit dem Weitergabedienst verknüpft sind, und Zuverlässigkeitsinformationen, die dem Weitergabedienst verknüpft sind, enthalten.

8. Verfahren nach Anspruch 7, wobei die mit dem Weitergabedienst verknüpfte Priorität auf der Grundlage einer Priorität eines eingerichteten Sidelink Radio Bearer Logical Channel (SLRB/LCH) von einem oder mehreren Knoten in einem Weitergabepfad bestimmt wird.

9. Verfahren nach Anspruch 7, wobei die mit dem Weitergabedienst verknüpfte Latenz auf der Grundlage einer mit einem einzelnen Sprung verknüpften Latenz und einer maximalen Anzahl zulässiger Sprünge bestimmt wird.

10. Verfahren nach Anspruch 7, wobei die mit dem Weitergabedienst verknüpfte Zuverlässigkeit auf der Grundlage einer mit einem einzelnen Sprung verknüpften Zuverlässigkeit und einer maximalen Anzahl zulässiger Sprünge bestimmt wird.

11. Drahtlos-Sende- und -Empfangseinheit (Wireless Transmit/Receive Unit, WTRU) (102), umfassend:
einen Prozessor (118), und
einen Sender-Empfänger (120),
wobei der Prozessor und der Sender-Empfänger dazu eingerichtet sind, das Verfahren nach einem der Ansprüche 1-10 durchführen.

## Revendications

1. Procédé destiné à être utilisé dans une première unité émettrice-réceptrice sans fil, WTRU, le procédé comprenant :
la réception (1010), depuis une deuxième WTRU, d'un premier message de découverte qui inclut une indication d'un nombre de sauts jusqu'à une station de base, BS, à partir de la deuxième WTRU, une indication d'un emplacement de la BS, et des paramètres de qualité de service, QoS, de la deuxième WTRU ;
la détermination (1012), sur la base de l'emplacement de la BS, d'une distance de la première WTRU à la BS, dans lequel la distance déterminée à la BS se trouve dans une plage autorisée préconfigurée, dans lequel la plage autorisée préconfigurée est associée à un nombre de sauts à partir de la première WTRU ;
la détermination (1014), sur la base des paramètres de QoS de la deuxième WTRU, d'une charge de relais de la première WTRU, et d'une puissance reçue de signal de référence de liaison latérale, SL, SL RSRP, du premier message de découverte reçu, de paramètres de QoS de la première WTRU pour un service de relais fourni par la première WTRU ;
la transmission (1018), sur la base des paramètres de QoS de la première WTRU et de la distance déterminée à la BS, à une troisième WTRU, d'un deuxième message de découverte.

2. Procédé selon la revendication 1, dans lequel les paramètres de QoS de la première WTRU sont des paramètres de QoS saut par saut ou des paramètres de QoS de bout en bout.

3. Procédé selon la revendication 1, dans lequel les paramètres de QoS de la deuxième WTRU sont des paramètres de QoS saut par saut ou des paramètres de QoS de bout en bout.

4. Procédé selon la revendication 1, dans lequel les paramètres de QoS de la deuxième WTRU incluent au moins l'une parmi : des informations de priorité associées au service de relais, des informations de latence associées au service de relais, et des informations de fiabilité associées au service de relais.

5. Procédé selon la revendication 1, dans lequel le deuxième message de découverte inclut au moins l'un parmi : un type de relais de la première WTRU, un nombre de sauts jusqu'à la BS à partir de la première WTRU, les paramètres de QoS de la première WTRU, et un emplacement de la BS.

6. Procédé selon la revendication 5, dans lequel le type de relais de la première WTRU est un type de relais WTRU-WTRU ou un type de relais WTRU-BS.

7. Procédé selon la revendication 5, dans lequel les paramètres de QoS de la première WTRU incluent au moins l'une parmi : des informations de priorité associées au service de relais, des informations de latence associées au service de relais, et des informations de fiabilité associées au service de relais.

8. Procédé selon la revendication 7, dans lequel la priorité associée au service de relais est déterminée sur la base d'une priorité d'un canal logique de support radio de liaison latérale, SLRB/LCH, établi à partir d'une tonalité ou de multiples nœuds dans un trajet de relais.

9. Procédé selon la revendication 7, dans lequel la latence associée au service de relais est déterminée sur la base d'une latence associée à un saut et d'un nombre maximal de sauts autorisés.

10. Procédé selon la revendication 7, dans lequel la fiabilité associée au service de relais est déterminée sur la base d'une fiabilité associée à un saut et d'un nombre maximal de sauts autorisés.

11. Unité émettrice-réceptrice sans fil, WTRU, (102) comprenant :
un processeur (118), et
un émetteur-récepteur (120),
le processeur et l'émetteur-récepteur étant configurés pour réaliser le procédé selon l'une quelconque des revendications 1 à 10.
